(19) Europäisches Patentamt / European Patent Office / Office européen des brevets

(11) **EP 3 286 515 B1**

(12) **EUROPEAN PATENT SPECIFICATION**

(45) Date of publication and mention
of the grant of the patent:
**12.07.2023 Bulletin 2023/28**

(21) Application number: **16756293.3**

(22) Date of filing: **24.02.2016**

(51) International Patent Classification (IPC):
**F28F 27/02** (2006.01)    **F28D 21/00** (2006.01)

(52) Cooperative Patent Classification (CPC):
**F28F 27/02;** F28D 2021/0019

(86) International application number:
**PCT/US2016/019391**

(87) International publication number:
**WO 2016/138156 (01.09.2016 Gazette 2016/35)**

(54) **METHODS OF DYNAMICALLY EXCHANGING HEAT AND SYSTEMS**

VERFAHREN FÜR DYNAMISCHEN WÄRMEAUSTAUSCH

PROCÉDÉS D'ÉCHANGE THERMIQUE DYNAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2015 US 201562120336 P**

(43) Date of publication of application:
**28.02.2018 Bulletin 2018/09**

(73) Proprietor: **Sustainable Energy Solutions, Inc.
Ball Ground, GA 30107 (US)**

(72) Inventor: **BAXTER, Larry L.
Ball Ground, Georgia 30107 (US)**

(74) Representative: **Studio Torta S.p.A.
Via Viotti, 9
10121 Torino (IT)**

(56) References cited:
| | |
|---|---|
| **EP-A1- 0 942 156** | **US-A- 3 888 303** |
| **US-A- 5 024 263** | **US-A- 5 395 451** |
| **US-A- 5 395 451** | **US-A1- 2007 289 732** |
| **US-A1- 2007 289 732** | **US-A1- 2009 151 768** |
| **US-A1- 2010 281 882** | **US-A1- 2012 006 049** |
| **US-A1- 2012 192 813** | **US-B1- 6 412 551** |

**Description**

CROSS-REFERENCE TO RELATED APPLICATIONS

This application claims priority to United States Provisional Patent Application No. 62/120,336, entitled "METHODS OF DYNAMICALLY EXCHANGING HEAT AND SYSTEMS AND DEVICES RELATED THERETO," filed February 24, 2015.

TECHNICAL FIELD

The present disclosure relates generally to industrial processes. More specifically, the present disclosure relates to methods of dynamically exchanging heat between two or more streams, and systems and devices related thereto.
Document US 2007/289732 A1 represents the closest prior art.

BRIEF DESCRIPTION OF THE DRAWINGS

Non-limiting and non-exhaustive embodiments of the disclosure are described, including various embodiments with reference to the Figures, in which:

Figure 1 illustrates a conventional two-stream counter-current heat exchanger.
Figure 2 illustrates temperature profiles in a balanced two-stream counter-current heat exchanger.
Figure 3 illustrates temperature profiles in a balanced two-stream counter-current heat exchanger wherein the heat transfer coefficients between the cold stream and the separation plate are higher than those involving the hot stream.
Figure 4 illustrates temperature profiles in an efficient complex heat exchanger wherein the system has a phase change.
Figure 5 illustrates temperature profiles in an imbalanced two-stream counter-current heat exchanger after the hot stream flow rate was independently increased relative to the hot stream flow rate used to calculate Figure 2.
Figure 6 illustrates temperature profiles in an imbalanced two-stream counter-current heat exchanger after the cold stream flow rate was independently increased relative to the cold stream flow rate used to calculate Figure 2.
Figure 7 illustrates temperature profiles in a balanced two-stream counter-current heat exchanger after both stream flow rates are equally increased relative to the flow rates used to calculate Figure 2.
Figure 8 illustrates a dynamic heat exchanger system according to one embodiment.
Figure 9 illustrates a dynamic heat exchanger system according to a similar embodiment to that illustrated in Figure 8.
Figure 10 illustrates the dynamic heat exchanger system of Figure 9 when a portion of the hot flow is stored in the hot storage tank.
Figure 11 illustrates the dynamic heat exchanger system of Figure 9 wherein fluid in the cold storage tank is used to supplement the cold flow.
Figure 12 illustrates the dynamic heat exchanger system of Figure 9 when a portion of the cold flow is stored in the cold storage tank.
Figure 13 illustrates the dynamic heat exchanger system of Figure 9 when fluid in the hot storage tank is used to supplement the hot flow.
Figure 14 illustrates an embodiment of a dynamic heat exchanger system that utilizes an independent stream.
Figure 15 illustrates operation of the dynamic heat exchanger system of Figure 14 when the high-temperature stream contains more energy or enthalpy than can be balanced by the low-temperature stream.
Figure 16 illustrates operation of the dynamic heat exchanger system of Figure 14 when the low-temperature stream contains more energy or enthalpy than can be balanced by the high-temperature stream.
Figure 17 illustrates data from comparative experiments with systems similar to that illustrated in Figure 9, where one system had the dynamic technology active, one system had the dynamic technology idle, and both systems experienced a temporary step change in the cold stream flow rate.
Figure 18 illustrates temperatures of the outlet streams from the system with idle dynamic technology in the experiments referenced in the description of Figure 17.
Figure 19 illustrates data from experiments with a system similar to that illustrated in Figure 14, where the independent stream was stagnant, idling the dynamic technology, and the system experienced a temporary step change in the cold stream flow rate.
Figure 20 illustrates temperatures of the outlet streams from the experiments referenced in the description of Figure 19.
Figure 21 illustrates the comparative heat exchanger efficiency between the experimental systems referenced in the description of Figure 17 with perturbations in $\zeta$ ranging from one to greater than one.

Figure 22 illustrates the comparative heat exchanger efficiency between the experimental systems referenced in the description of Figure 17 with perturbations in $\zeta$ ranging from one to less than one.

Figure 23 illustrates the comparative effects of active and idle dynamic technology on the heat exchanger efficiency of the experimental system referenced in the description of Figure 19 with perturbations in $\zeta$ ranging from one to greater than one.

Figure 24 illustrates the comparative effects of active and idle dynamic technology on the heat exchanger efficiency of the experimental system referenced in the description of Figure 19 with perturbations in $\zeta$ ranging from one to less than one.

DETAILED DESCRIPTION

This document describes methods, devices, and systems that can decrease or eliminate heat exchanger performance and efficiency losses during transient changes in flow rates or other properties of the streams passing through them. For example, when the flow rate of any one stream entering an optimized and balanced heat exchanger changes, it degrades the heat exchanger performance, creating larger temperature differences in the entering and exiting streams than would otherwise exist. This performance degradation leads to both direct and indirect consequences. The direct consequence involves energy consumption and stream exit temperatures outside of their design ranges. These direct results frequently create indirect consequences, such as missing quality control and assurance standards, creating safety or environmental hazards, and disposing or flaring of compromised material. These indirect consequences often raise more concern than the direct consequences.

Heat exchangers can also limit the rates at which process loads can change. The heat exchanger constraints often represent the most restrictive constraints in the process and thereby compromise the agility and responsiveness of processes. The imposed constraints often are associated with thermal stresses, expansion, or temperature changes in the devices or their near neighbors in the flow process. The methods, systems, and devices described in this document can reduce or eliminate the constraints heat exchangers place on the rate at which loads or other stream properties can change.

Methods of dynamically exchanging heat between two or more streams, and systems related thereto, are disclosed herein. It will be readily understood that the embodiments as generally described below and as illustrated in the examples and Figures could be modified in a wide variety of ways. Thus, the following more detailed description of various embodiments, as described below and represented in the examples and Figures, is not intended to limit the scope of the disclosure, but is merely representative of various embodiments.

The phrases "connected to" and "coupled with" refer to any form of interaction between two or more entities, including mechanical, electrical, magnetic, electromagnetic, fluid, and thermal interaction. Two entities may interact with each other even though they are not in direct contact with each other. For example, two entities may interact with each other through an intermediate entity.

Methods of dynamically exchanging heat between two or more streams may comprise methods of managing heat transfer between streams and/or methods of rapidly changing upstream conditions while reducing downstream temperature deviations.

In all embodiments of methods of managing heat exchange between a first stream and a second stream over a broad range of conditions, the methods comprise exchanging heat between a first stream and a second stream, wherein the first stream comprises an upstream portion and a downstream portion and wherein the second stream also comprises an upstream portion and a downstream portion. The invention is defined by the features of claim 1.

For example, in process situations where the upstream portion of a stream is the portion experiencing a change, heat transfer between the streams may be managed to reduce deviations from a design temperature of the downstream portion of the stream. For instance, deviations from the design temperature may be reduced to a percent deviation of about 25% or less, about 20% or less, about 15% or less, about 10% or less, about 5% or less, or about 1 % or less. Percent deviation may be calculated as actual deviation, divided by potential deviation without adding or removing material, times 100.

The methods disclosed herein may further comprise identifying the existence of a change in conditions in either the first stream or the second stream, such as at a heat exchanger outlet of the stream experiencing the change. Likewise, the identification may occur prior to any deviation in the design temperature of the downstream portion of the stream experiencing the change, such as prior to the upstream portion of the stream experiencing the change entering the heat exchanger (i.e., at the inlet or further upstream).

Some embodiments may comprise determining whether the change in conditions is a permanent change or a temporary change. For example, for a temporary change in conditions, an optimal amount of material to be added or removed from the upstream portion of the stream not experiencing the change in conditions may be determined so as to optimize the heat transfer. For example, a profile over time or location, or both, for the temporary change in conditions may be determined. Likewise, a corresponding profile over time or location, or both, for the addition or removal of material that will maintain the desired design temperature may be determined as well.

In some embodiments where there is a permanent change in conditions in a first stream, a profile may be determined over time of an amount of material to be added or removed from the upstream portion of the second stream that will maintain a design temperature of the downstream portion of the first stream. For example, material from a reservoir may be initially added, or material may be initially removed to the reservoir. The reservoir will generally be separate from a primary source of the second stream. The conditions of the primary source of the second stream are then gradually adjusted until material does not need to be added from the reservoir or removed to the reservoir to maintain the design temperature of the downstream portion of at least the first stream.

Methods disclosed herein may further comprise appropriately timing the addition or removal of material. This may avoid a deviation in the design temperature of the downstream portion of the stream experiencing the change, or in any stream not experiencing the change. For example, the percent deviation from the design temperature may be reduced by about 25% or less, about 20% or less, about 15% or less, about 10% or less, about 5% or less, or about 1% or less.

Timing the addition or removal of material may utilize feed-forward control, model-predictive control, or similar control strategies. As discussed, timing the addition of material to or removal of material from the upstream portion of the stream not experiencing a change in conditions may substantially maintain balance in a heat exchanger.

Likewise, managing heat transfer between streams may occur in a certain time range. For example, managing heat transfer between the first stream and the second stream may occur within about 30 seconds or less, about 15 seconds or less, about 5 seconds or less, about 2 seconds or less, or about 1 second or less of the change in conditions of one of the streams.

Many of the embodiments disclosed herein mention exchanging heat between two streams. It should be understood that exchanging heat may occur with one or more additional streams while exchanging heat between the first stream and the second stream.

In the methods disclosed herein, the first stream and the second stream may flow counter-current, parallel, or perpendicular to each other. The methods may further comprise adding the same material already present in the stream or adding different material from that present in the stream.

In some embodiments of methods of managing heat transfer between streams over a broad range of conditions, the methods comprise exchanging heat between two or more streams under steady-state conditions. The methods may further comprise adding material to an independent stream in thermal communication with the two or more streams, when any or all of the two or more streams experience a change in conditions, to thereby manage heat transfer between the two or more streams during the change in conditions. The upstream portions of some or all of the two or more streams may be at different temperatures.

The independent stream may comprise a discontinuous stream with a higher-temperature storage tank at one end of the stream and a lower-temperature storage tank at the other end of the stream. For example, the higher-temperature storage tank may be maintained at a higher level and the lower-temperature storage tank at a lower level. This may be implemented when the two or more streams comprise a cooler temperature stream at risk for flow rate increases and/or the two or more streams comprise a higher temperature stream at risk for flow rate decreases. Higher-temperature material may be readily added to the independent stream to thereby manage heat transfer between the two or more streams and maintain a design temperature of a downstream portion of at least one stream experiencing a change.

Likewise, the higher-temperature storage tank may be maintained at a lower level and the lower-temperature storage tank at a higher level when the two or more streams comprise a cooler temperature stream at risk for flow rate decreases and/or the two or more streams comprise a higher temperature stream at risk for flow rate increases. This may allow that lower-temperature material to be readily added to the independent stream to thereby manage heat transfer between the two or more streams and maintain a design temperature of a downstream portion of at least one stream experiencing a change.

Alternatively, the higher-temperature storage tank may be maintained at a moderate level and the lower-temperature storage tank at a moderate level. This may allow the lower-temperature material or higher-temperature material to be readily added to the independent stream to thereby manage heat transfer between the two or more streams and maintain a design temperature of a downstream portion of at least one stream experiencing a change.

Material may be shuttled between the higher-temperature storage tank and the lower-temperature storage tank by temporarily adding material to the independent stream when the two or more streams are at steady-state conditions, wherein the adding is conducted at a low enough flow rate that a heat exchanger transferring heat between the two or more streams is substantially balanced during the shuttling of the material.

In some examples of heat exchanger systems, the systems comprise a heat exchanger configured to exchange heat between at least a first stream and a second stream, such as, for example, a double-pipe heat exchanger, shell-and-tube heat exchanger, plate heat exchanger, or plate-and-shell heat exchanger. The systems may further comprise a first flow diverter located in an upstream portion of the first stream. The first flow diverter may be in fluid communication with a primary source of the first stream and also in fluid communication with a first reservoir. The first flow diverter may be configured to optionally divert material from the upstream portion of the first stream to the first reservoir or optionally add material from the first reservoir to the upstream portion of the first stream. The system may further comprise a control system configured to control the first flow diverter to thereby control adding material to or removing material from the upstream portion of the first stream, when the upstream portion of at least the second stream is experiencing a change in conditions, thereby changing heat transfer between at least the first stream and the second stream.

In some embodiments of methods for rapidly changing upstream conditions while reducing downstream temperature deviations, the methods comprise supplying at least a first stream and at least a second stream to a heat exchanger system of the above paragraph. The methods may further comprise rapidly changing the condition of the upstream portion of the second stream from an initial condition to a new condition and comparatively slowly changing the condition of the primary source of the first stream from an initial condition to a new condition, wherein the heat exchanger is substantially balanced when the first and second streams are each in the initial conditions, and the heat exchanger is substantially balanced when the first and second streams are each in the new conditions. The methods may further comprise temporarily adding material from the reservoir to the upstream portion of the first stream or temporarily removing material from the upstream portion of the first stream to the reservoir, to substantially maintain heat transfer balance in the heat exchanger while the primary source of the first stream is changing to its new condition.

In some examples of heat exchanger systems, the systems comprise a heat exchanger configured to exchange heat between two or more streams and an independent stream. The systems may further comprise a reservoir in fluidic communication with the independent stream. The systems may further comprise a control system configured to control adding material to the independent stream from the reservoir, when an upstream portion of any or all of the two or more streams experiences a change in conditions, to thereby change heat transfer between the two or more streams.

In some embodiments of methods for rapidly changing upstream conditions while reducing downstream temperature deviations, the methods comprise supplying two or more streams to a heat exchanger system of the above paragraph. The methods may further comprise rapidly changing the condition of the upstream portion of at least one of the two or more streams from an initial condition to a new condition, and comparatively slowly changing the condition of the upstream portion of a different one of the two or more streams from an initial condition to a new condition, wherein the heat exchanger is substantially balanced when the two or more streams are each in their respective initial condition, and the heat exchanger is also balanced when the two or more streams are each in their respective new condition. The methods may further comprise temporarily adding material from the reservoir to the independent stream to substantially maintain heat transfer balance in the heat exchanger while the different stream is changing to its new condition.

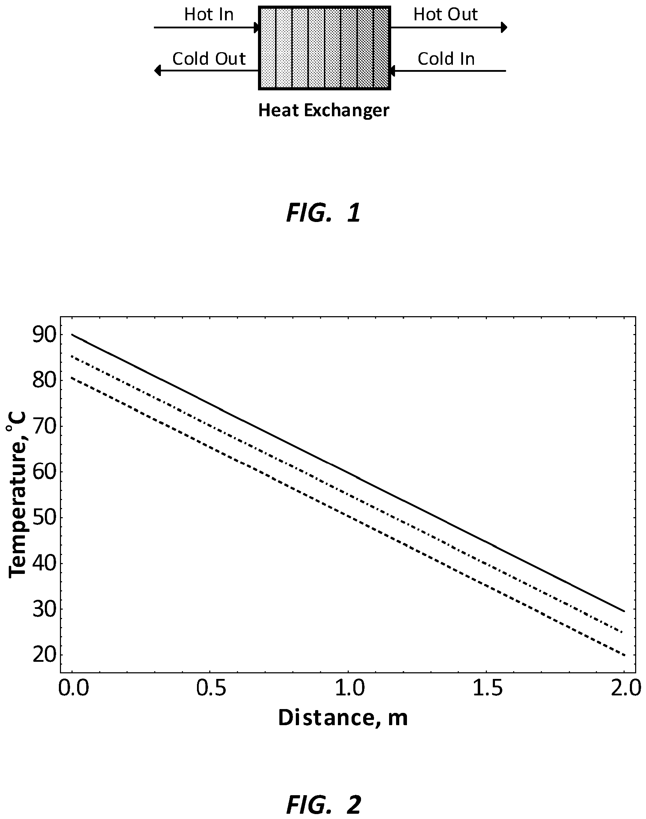

Figure 1 illustrates a generic, counter-current, two-stream heat exchanger that could be plate-and-frame, brazed-plate, shell-and-tube, or essentially any other design. Hot and cold streams flow into the exchanger on the left and right sides, respectively, and exchange heat such that the hot stream cools and the cold stream warms. The terminology for the outlet streams used here is common in the industry, but it is both possible and common that the hot stream outlet temperature is colder than the cold stream outlet temperature, leading to possible confusion if one considers temperatures after heat exchange.

Many heat exchangers involve two streams as indicated in Figure 1. However, several industries use multi-stream heat exchangers, in which several streams enter and exit the exchanger. These multi-stream exchangers are commercially available and find common application in industries where heat integration is especially important and where there are several streams involved in the process. Some such industries include cryogenics, gas processing, and some portions of chemical processing. In these applications, the streams may enter and exit at different locations or may pass entirely through the heat exchanger.

Heat exchanger efficiency may be defined as the initial Gibbs energy in the incoming streams that is converted to entropy during heat exchange, normalized by the largest possible entropy formation with the incoming streams. For an adiabatic heat exchanger-that is, a heat exchanger that limits heat exchange to the streams and does not exchange heat with the environment-the mathematical description becomes

$$\eta = 1 - \frac{\sum_{outlet} m_i \hat{g}_i - \sum_{inlet} m_i \hat{g}_i}{\sum_{eq} m_i \hat{g}_i - \sum_{inlet} m_i \hat{g}_i} = 1 - \frac{(\Delta Ts)_{obs}}{(\Delta Ts)_{eq}} = 1 - \frac{\sum_{outlet} T_i m_i \hat{s}_i - \sum_{inlet} T_i m_i \hat{s}_i}{\sum_{eq} T_i m_i \hat{s}_i - \sum_{inlet} T_i m_i \hat{s}_i}$$

where $(\Delta Ts)_{obs}$ represents the net change in the product of temperature and entropy observed in the streams, $(\Delta Ts)_{eq}$ represents the entropy change that would occur if the streams came to thermal equilibrium, $\sum_{outlet} T_i m_i \hat{s}_i$ represents the sum of the product of the temperature, mass flow rate, and specific entropy summed over all outlet streams, $\sum_{inlet} T_i m_i \hat{s}_i$ represents a similar sum over all inlet streams, and $\sum_{eq} T_i m_i \hat{s}_i$ represents this product summed over outgoing streams at the equilibrium temperature (that is, the temperature that results from all streams reaching thermal equilibrium). This efficiency is unity if the inlet and outlet streams transfer heat with no temperature difference (ideal heat exchanger) and is zero if all outlet streams come to the same equilibrium temperature, which would be the poorest possible heat exchanger performance from an efficiency or entropy point of view.

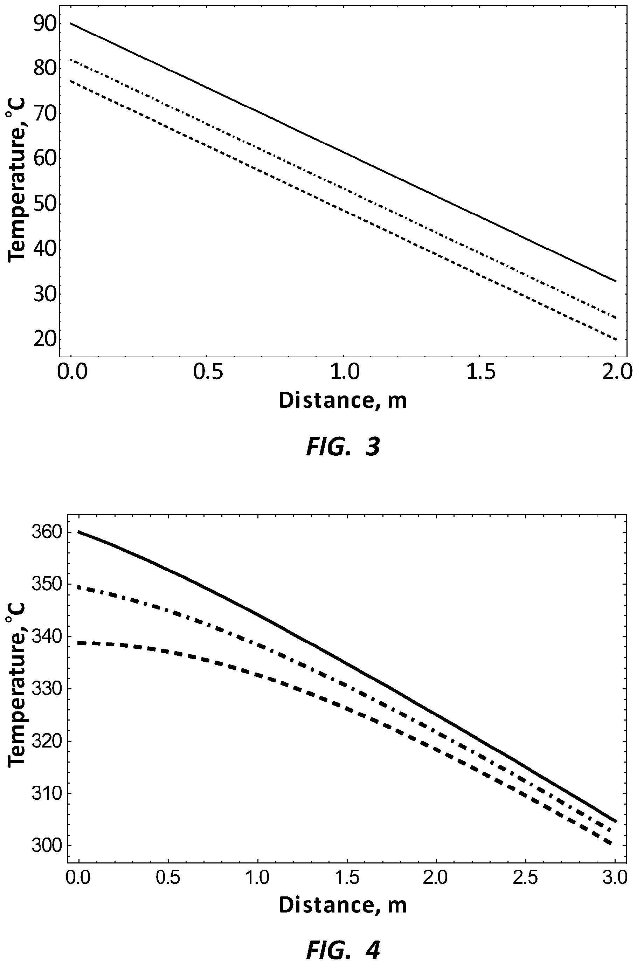

Figure 2 illustrates the internal temperature profiles in a balanced, counter-current heat exchanger. The hot and cold stream temperature profiles parallel each other, with the temperature profile of the thin metal plate separating them lying at the average of the stream temperatures in this case. Figure 3 illustrates the temperature profiles for a similar heat exchanger in which heat transfer coefficients between the cold stream and the separation plate are higher than those involving the hot stream, resulting in a larger temperature difference between the hot stream and the separation plate and a correspondingly smaller difference between the cold stream temperature and the separation plate. Such differences and their converses (cold difference larger than hot) are common, but such a heat exchanger is still balanced. A balanced heat exchanger maximizes the efficiency within the constraints of the heat exchanger design and the flow rates. It is not readily apparent from the definition of efficiency what immediately available measurements indicate the exchanger is balanced. A more practical but less general indication that the exchanger is balanced is when the difference in temperatures of the two streams is the same at all points in the exchanger, that is, when the hot and cold stream temperatures differ by a constant amount:

$$T_h(x) - T_c(x) \equiv \Delta T(x) = a$$

where $T_h(x)$ and $T_c(x)$ represent the temperatures of the hot and cold streams as functions of position in the heat exchanger, respectively, and $a$ is a constant. Still, this is not too convenient, as internal temperature profiles are often difficult to measure, especially on a stream-by-stream basis. However, the inlet of the hot stream lies at the same position or value of x as the outlet of the cold stream, and vice versa. These temperatures provide the most convenient measures of a balanced exchanger, which then becomes

$$T_{h,inlet} - T_{c,outlet} = T_{h,outlet} - T_{c,inlet}$$

This is a rigorous result for simple heat exchangers. Simple heat exchangers, in this context, have (a) streams with constant heat capacities, densities, and velocities, (b) no phase changes, reactions, or other complex behavior in the exchanger, and (c) heat transfer rates that are approximately equal in all parts of the exchanger. Complex exchangers can exhibit maximum efficiency under conditions where the temperature differences are not necessarily equal (Figure 4).

Theoretical analyses of heat exchanger performance lead to some useful dimensionless numbers. One of these is the ratio of mass flow rate times the heat capacities in each channel. This ratio, called $\zeta$ in this paper, assumes the mathematical form below for a system with unit width in both streams:

$$\zeta(x) = \frac{\dot{m}_1 c_{p,1}}{\dot{m}_2 c_{p,2}} = \frac{L_1 v_1 \rho_1 c_{p,1}}{L_2 v_2 \rho_2 c_{p,2}} \; ,$$

where $\dot{m}_i$, $L_i$, $v_i$, $\rho_i$, and $c_{p,i}$ represent the mass flow rate, channel thickness, velocity, density, and specific heat capacity of stream $i$ and where $\zeta(x)$ is positive for cocurrent and negative for counter-current exchangers because of the signs on the velocities. The mass flow rate in this ratio is a signed value, with flow rates in opposite directions having opposite signs. The index $i$ is 1 for the hot flow and 2 for the cold flow. If the heat exchanger involves more than one hot or cold flow, $\zeta$ becomes the sum of these products for all of the flows in the direction of the hot streams divided by the sum for all of the flows in the cold stream. If the streams do not have the same cross-sectional areas perpendicular to the flow, the definition includes these areas ($A_i$).

$$\zeta(x) = \frac{\sum_{hot} A_i v_i \rho_i c_{p,i}}{\sum_{cold} A_i v_i \rho_i c_{p,i}}$$

In a simple, balanced heat exchanger, $\zeta$ usually is at or near a value of -1. In real fluids with heat capacities, densities, geometries, and other properties that vary with temperature and position, $\zeta$ depends on position. In such cases, an average value of $\zeta$ close to -1 should be near the balanced heat exchanger condition if there are no phase changes or other complexities. Heat transfer coefficients in the heat exchanger also vary with position.

In the computations that lead to Figure 2, both sides of the heat exchanger have the same heat transfer coefficient. As indicated, the hot and cold stream temperatures differ by the same amount, about 10 °C in this case, at all locations in the heat exchanger.

Figure 2 illustrates temperature profiles for the hot and cold streams (top and bottom, respectively) and for the plate separating them (middle line) in a counter-current, steady-state, balanced heat exchanger with $\zeta$ = -1 and temperature boundary conditions/set points set at the hot (x = 0) end for the hot stream and the cold (x = 2) end for the cold stream.

Figure 3 illustrates temperature profiles for the hot and cold streams (top and bottom, respectively) and for the plate separating them (middle line) in a counter-current, steady-state, balanced heat exchanger with $\zeta$ = -1 and temperature boundary conditions/set points set at the hot (x = 0) end for the hot stream and the cold (x = 2) end for the cold stream. In this case, the heat transfer coefficient for the hot stream is 25% lower and that of the cold stream is 25% higher than the conditions in Figure 2.

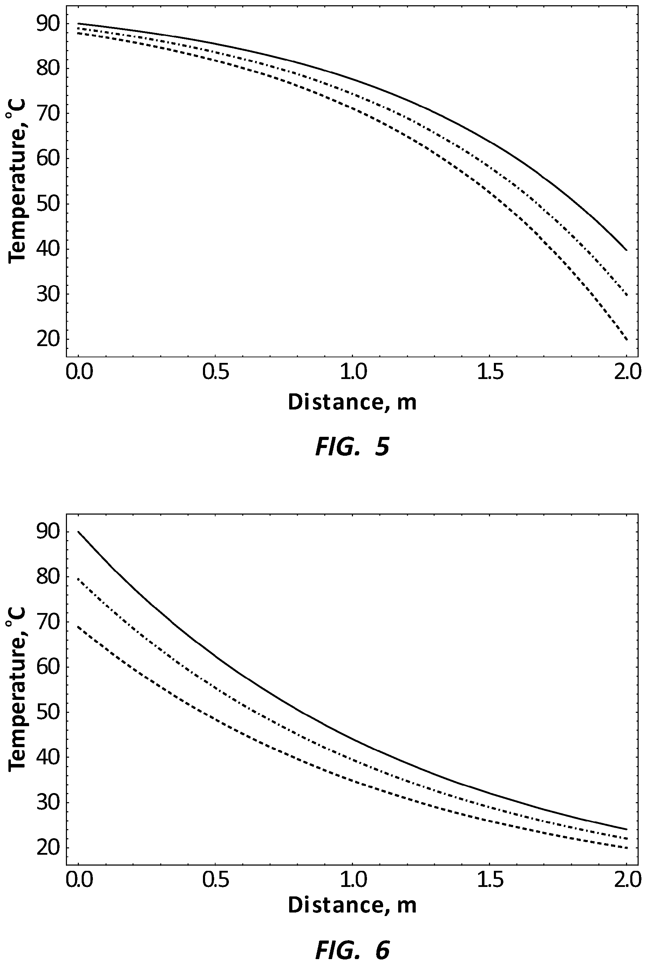

If the hot stream flow rate increases by 35%, the value of $\zeta$ changes from - 1 to -1.35 and the resulting heat exchanger temperature profiles approximate those shown in Figure 5. The same effect could be caused by increasing the hot-side heat capacity, channel thickness, or density or, equivalently, decreasing one of the same properties of the cold stream by 35%, relative to the values that produced the results in Figure 2. As indicated, the difference in the hot and cold stream temperatures decreases on the end near the hot inlet to the heat exchanger by about 8 °C, from about 10 °C to about 2 °C, and increases on the end with the cold inlet to the exchanger by about 10 °C, from about 10 °C to about 20 °C. The increase on the cold end is much larger than the decrease on the hot end.

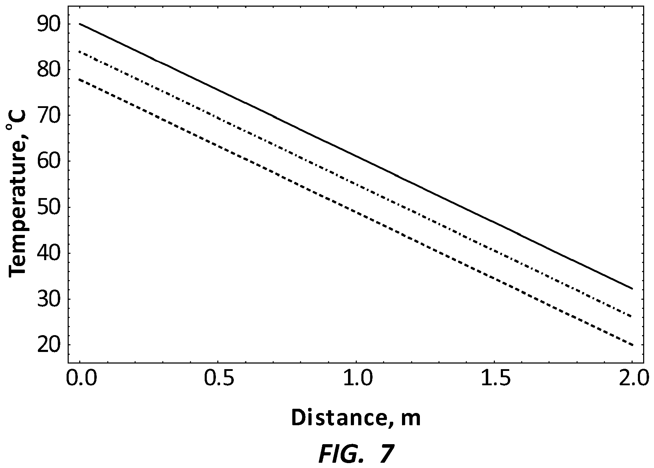

Conversely, if the cold flow increases by about 35% from its value when the heat exchanger is balanced, a conceptually similar but quantitatively opposite effect occurs (Figure 6). That is, the hot end temperature difference increases from 10 °C to about 20 °C while the cold end difference decreases from about 10 °C to about 2 °C. Changes in heat exchanger outlet temperatures such as these occur in transients associated with process upsets, load changes, and similar real-world adjustments. The changes commonly are transient as the process flow rates readjust to the new conditions or as the upset returns to normal operation. For example, if flow rates of both streams increase by 35%, the exchanger returns to a balanced condition, but with slightly higher (about 12 °C or 2 °C higher) temperature differences between the streams compared to the conditions in Figure 2, as illustrated in Figure 7. Often upsets or changes result in the heat exchanger performance starting at conditions of Figure 2 and moving in time through the conditions of Figure 5 or Figure 6 and ending back at the conditions of Figure 2 or Figure 7. The conditions of Figure 5 or Figure 6 frequently lead to the product not meeting its specifications or not being produced at all, resulting in lost production, increased waste, and frequently increased safety or environmental hazards. Therefore, operators must move very slowly through the process flow changes to keep flow rate changes at small levels that avoid these problems.

Figure 4 illustrates heat exchanger temperature profiles for a system in which there is a phase change.

Figure 5 illustrates temperature profiles for the hot and cold streams (top and bottom, respectively) and for the plate separating them (middle line) in a counter-current, steady-state heat exchanger with $\zeta$ = -1.35 and temperature boundary conditions/set points set at the hot (x = 0) end for the hot stream and the cold (x = 2) end for the cold stream.

Figure 6 illustrates temperature profiles for the hot and cold streams (top and bottom, respectively) and for the plate separating them (middle line) in a counter-current, steady-state heat exchanger with $\zeta$ = -1/1.35 = 0.74 and temperature boundary conditions/set points set at the hot (x = 0) end for the hot stream and the cold (x = 2) end for the cold stream.

Figure 7 illustrates temperature profiles for the hot and cold streams (top and bottom, respectively) and for the plate separating them (middle line) in a counter-current, steady-state, balanced heat exchanger with $\zeta$ = -1 but with both hot and cold flows 35% higher than the conditions in Figure 2 and temperature boundary conditions/set points set at the hot (x = 0) end for the hot stream and the cold (x = 2) end for the cold stream.

The methods, systems, and devices disclosed herein provide means to reduce or minimize these transient effects and apply broadly to heat exchangers and fluids of nearly all types.

The dynamic heat exchanger system can either retrofit an existing heat exchanger or use an entirely new heat exchanger. The following discussion first discusses the retrofit option in the context of a conventional, two-stream exchanger and applies most conveniently to a system that involves relatively high volumetric heat capacities, such as two liquid streams. Alternatively, a new heat exchanger with one or more additional streams may be better if one or more of the streams have low volumetric heat capacities, such as gases, or if there is some safety, environmental, or similar reason not to install t-joints in existing lines. The discussion of this non-retrofit version follows that of the retrofit option in the context of adding one additional stream to a two-stream version.

All of the below embodiments suggest using t-joints and three-way valves in various locations. Any functional equivalent to these systems is suitable. In the case of t-joints, t-joints with valves or three-way valves would be suitable alternatives. The three-way valves require a system that can stop flow in all three streams or allow flow between two of the three streams. There exist many possible configurations to accomplish this, and these would be familiar with one skilled in the art of process flow design.

Retrofit System

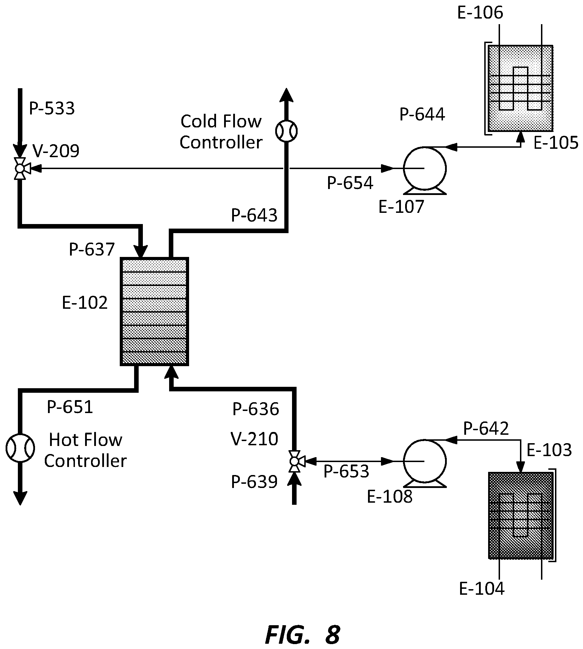

The retrofit system requires one or more additional valves, pumps, and tanks but does not require replacing or moving an existing heat exchanger. A simplified form (Figure 8) modifies an existing heat exchanger (E-102), hot and cold inlet flows (P-533/637 and P-639/636, respectively), outlet flows (P-643 and P-651), and flow controllers. The modifications include a valve, bidirectional pump, and tank with optional heating or cooling or insulation for each of the hot and cold inlet lines (V-209, E-107, E-105 and E-106, respectively for the hot flow, and V-210, E-108, E-104, and E-103, respectively, for the cold flow) connected with bidirectional pipes (P-654 and P-644 for the hot flow, and P-653 and P-642 for the cold flow). The pumps would normally have associated controllers (not illustrated), which would need to be bidirectional or able to control flows in both directions. It should be understood that this system needs only the equipment connected to the hot or the cold flow, not both, though both appear in this illustration.

Under normal conditions, there would be no flow to or from the tanks, and the heat exchanger would operate as usual. If an upset or transient changes one or both of the flows, the dynamic system creates a compensating flow using the ancillary systems such that the flow through the heat exchanger remains balanced, the level of material in the tanks changes, and the heat exchanger operates at its highest efficiency. When the upset passes or the transient subsides, flows in the ancillary systems return to zero. Thus the system levels oscillating changes in demand, random transients, and other dynamics.

A future transient or upset in the opposite direction may allow the system to return to its original condition, including the original levels of stored material in the tank. The tanks may also be refilled from other sources or filled relatively slowly from the process streams.

In practice, bidirectional pumps are rare and both inefficient and expensive compared to traditional unidirectional counterparts. Bidirectional controllers are even more rare and expensive. And the pumps and controllers are expensive compared to valves. The remainder of this discussion presumes a configuration that allows a single unidirectional pump to accomplish the same thing, removing the complexity of two pumps and controllers but adding more valves. The plumbing complicates the flow diagram, but the operating principle is the same as indicated in the less complex system illustrated in Figure 8.

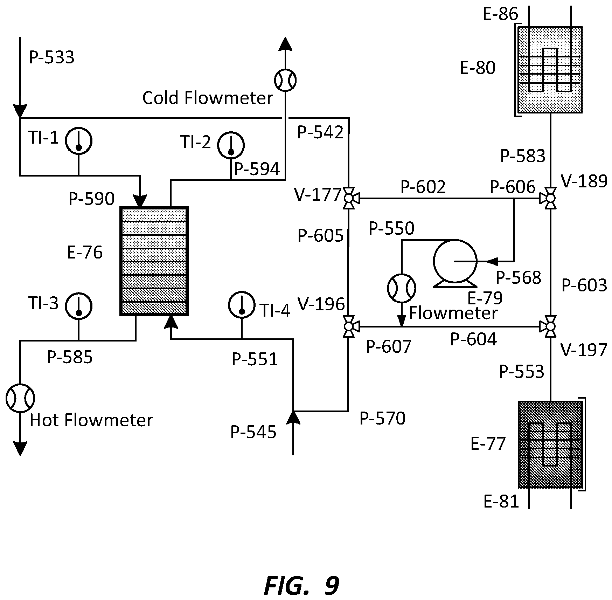

The dynamic, two-stream heat exchanger (Figure 9) includes a conventional heat exchanger (E-76), such as an existing heat exchanger that has been retrofitted with incoming and outgoing hot and cold streams (P-533, P-545, P-594, and P-585, respectively). Sensors include flowmeters on the two outgoing streams (P-594 and P-585) and temperature indicators on the heat exchanger inlets and outlets (TI-1, TI-2, TI-3, and TI-4). All of these components would be typical in a conventional heat exchanger. In balanced operation, no material flows through stream P-542 or P-570 or any of the subsequent plumbing. The heat exchanger operates as usual and the dynamic component remains idle. The dynamic operation activates during imbalanced operation and uses the t-junctions in the incoming and outgoing streams and the equipment to which they connect, as indicated in the diagram. All of these modifications can be done as retrofits to an existing heat exchanger, with the only changes to the existing process and plumbing being installation of flow diverters (t-joints, three-way valves, or functional equivalent devices) in the incoming streams of the heat exchanger. The following discussion describes the hot inlet and associated equipment first, followed by the cold inlet and associated equipment.

The incoming hot stream (P-533) (primary source of a first stream) connects to a T-junction (first flow diverter or at least a portion of it), one line from which (P-590) connects to the heat exchanger (E-76) and represents the heat exchanger inlet hot flow. The stream connected to the heat exchanger (P-590) may have different properties, commonly a different flow rate, than the incoming hot stream (P-533). The second line (P-542) from the T-junction in the incoming hot stream connects to a three-way valve (V-177). One line (P-605) from this valve (V-177) connects to the cold side of this process through a three-way valve (V-196), and is discussed later in conjunction with the remaining cold-side components. The other line (P-602) from this valve (V-177) connects to a t-joint (joint connecting P-602, P-606, and P-568). One line (P-568) from this t-joint leads to the pump (E-79) (transport device) inlet. The second line (P-606) from this t-joint connects with a three-way valve (V-189). One line (P-603) from this valve connects to a different three-way valve (V-197) which lies on the cold side of the system and is discussed later. The second line (P-583) connects to a hot storage tank (E-86) (first reservoir).

The inlet cold stream (P-545) (a primary source of the second stream) connects to a T-junction (second flow diverter or at least a portion of it), one line from which (P-551) connects to the heat exchanger (E-76) and represents the heat exchanger inlet cold flow. This flow may intentionally differ, such as, for example, in flow rate, from the incoming cold stream (P-545). The other line (P-570) from the T-junction connects to a three-way valve (V-196). One line (P-605) from this three-way valve (V-196) has already been discussed above. The second line (P-607) from the three-way valve (V-196) connects to another T-junction. One line (P-550) from this t-joint is the pump (E-79) outlet. The other line (P-604) from this T-junction connects to a three-way valve (V-197). One line from this three-way valve (V-197) connects to the cold storage (E-81) (second reservoir). The other line (P-603) from this three-way valve (V-197) was previously discussed.

A flow controller/meter for the pump controls the outlet stream (P-550) but could also be on the inlet stream (P-568). Temperature indicators (TI-1, TI-2, TI-3, and TI-4) for the heat exchanger's incoming and outgoing hot and cold streams (P-590, P-551, P-594, and P-585, respectively) could similarly be located in a variety of locations, though locating them close to the heat exchanger (E-76) may be preferable. Flows illustrated with no directional arrows could be in either direction and flow in different directions, depending on operational modes.

In balanced operation, no material flows through P-542, P-570, or any of the subsequent plumbing. The heat exchanger operates as usual, and the dynamic components are not used or needed.

As illustrated in Figure 9, a small portion of the hot and cold streams can mix during dynamic heat exchanger operation. Specifically, the amount of material in the pump inlet and outlet, P-568 and P-550, respectively, and in the pump E-79 and some of the surrounding lines could mix when operation changes modes. This could be prevented, such as, for example, by either using a single stream to do the balancing (e.g., the second flow diverter and the second reservoir are not present) or using separate pumps and dedicated plumbing lines for each reservoir.

Also, if the pump (E-79) is bidirectional, meaning it can pump in either direction, the plumbing could be simplified.

Also, the three-way valves illustrated here could be replaced with more common in-line valves located in pipes P-602, P-603, P-604, and P-605 and accomplish the same control. However, this would slightly increase the potential mixing of materials from the cold and hot streams when operating modes change.

It should be understood that a number of alternative plumbing schemes could be used depending on the number, location, and type of transport devices (e.g., pumps or blowers) used.

A heater (E-86) and a chiller (E-81) for the hot and cold storage tanks (E-80 and E-77, respectively) optionally provide means to overcome heat losses and slight temperature differences if needed. The tanks also would optionally be insulated.

Additional hot or cold streams could be present. Each additional stream could optionally also have a separate reservoir and flow diverter. Alternatively, when the material in two or more streams is the same, then those two or more streams could utilize the same reservoir, but with separate flow diverters.

A control system (not shown) is configured to control the first flow diverter (incoming hot stream T-junction and associated valves as needed) to thereby control adding material to or removing material from the upstream portion of the first stream (incoming stream of the hot stream), when the upstream portion of at least the second stream (incoming stream of the cold stream) is experiencing a change in conditions, thereby changing heat transfer between at least the first stream and the second stream. The control system is further configured to control the second flow diverter (incoming cold stream T-junction and associated valves as needed) to thereby control adding material to or removing material from the upstream portion of the second stream, when the upstream portion of at least the first stream is experiencing a change in conditions, thereby changing heat transfer between at least the first stream and the second stream.

In some embodiments of operating the dynamic heat exchanger system of Figure 9, the heat exchanger is brought closer to its balanced operation by filling or emptying the storage tanks during an operational transient (a change in conditions). Examples of possible transients include, but are not limited to, a change in flow rate, temperature, pressure, composition, density, heat capacity, or combinations thereof. The emptying or filling of the storage tanks changes the relative flow rates in the heat exchanger, which changes the heat transfer between the two streams and can mitigate the effect of the transient. In some embodiments, the choice of filling or emptying the tank is dictated by the current level of fluids in the tanks. The system can also manage transients by both filling one tank and emptying the other (e.g., removing material from the upper portion of the first stream and adding material to the upper portion of the second stream). Exemplary specific operations in specific scenarios are described below but are not intended to limit the possible operation of the existing stream dynamic heat exchanger system.

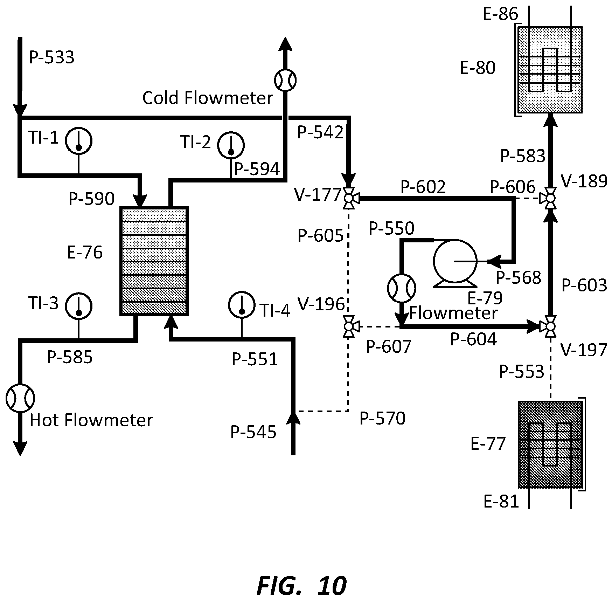

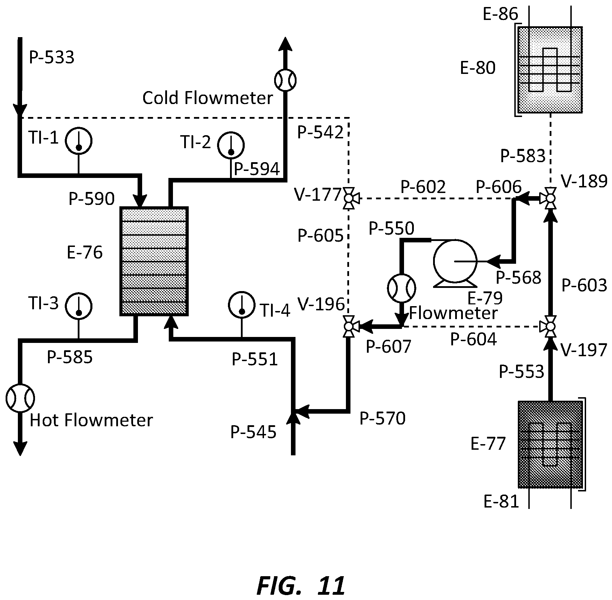

For example, the first scenario considers a transient where the hot incoming stream (P-533) transports more heat or enthalpy than the cold incoming stream (P-545) can balance in the heat exchanger ($|\zeta| > 1$, $\zeta < -1$). In this scenario, either a portion of the hot stream flows to the hot storage tank (E-80) or a portion of the stored cold material in the cold storage tank (E-77) flows to the cold stream, or some combination thereof, until the transient subsides. These scenarios appear in (Figure 10 and Figure 11), with bolded lines representing lines with flow, arrows representing the flow direction, and dashed lines representing lines with no flow.

Figure 10 illustrates exemplary dynamic heat exchanger system operation when the hot flow stream carries more heat or enthalpy than the cold stream can balance ($\zeta < -1$) and a portion of the hot flow is stored in the hot storage. Solid lines contain flow moving in the direction indicated by the arrows, and dashed lines have no flow. Figure 11 illustrates exemplary dynamic heat exchanger system operation when the hot flow stream carries more heat or enthalpy than the cold stream can balance ($\zeta < -1$) and the fluid in the cold storage tank supplements the cold flow to help balance the heat exchanger. Bold, solid lines contain flow moving in the direction indicated by the arrows, and dashed lines have no flow.

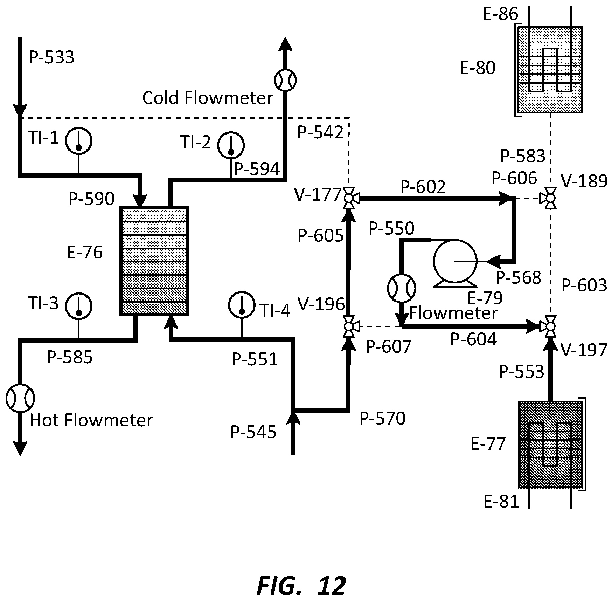

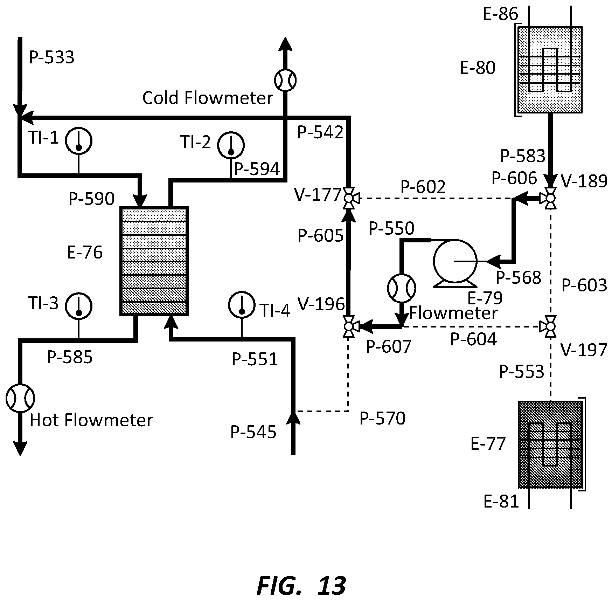

In converse examples, in cases where the cold incoming stream (P-545) is transporting less heat or enthalpy than the hot incoming stream (P-533) can balance in the heat exchanger ($-1 < \zeta < 0$), either a portion of the hot stream flows from the hot storage tank (E-80) or a portion of the stored cold material in the cold storage tank (E-77) flows into the cold stream, or some combination, until the transient subsides. These scenarios are illustrated in Figure 12 and Figure 13, with bolded lines representing lines in which material is flowing, arrows representing the flow direction, and dashed lines representing lines with no flow.

Figure 12 illustrates exemplary dynamic heat exchanger system operation when the cold flow stream carries less heat or enthalpy than the hot stream can balance (-1 < ζ < 0) and a portion of the cold flow is stored in the cold storage. Solid lines contain flow moving in the direction indicated by the arrows, and dashed lines have no flow. Figure 13 illustrates dynamic heat exchanger system operation when the cold flow stream carries more heat or enthalpy than the hot stream can balance (-1 < ζ < 0) and the stored hot fluid is used to supplement the hot flow rate. Solid lines contain flow moving in the direction indicated by the arrows, and dashed lines have no flow.

In the above scenarios, the temperature at which fluid is stored in the tank may be somewhat closer to the average temperature (cooler in the hot tank and warmer in the cold tank) than the incoming streams. If so, if the heat exchanger is balanced by withdrawing flows, this difference will be smaller than if it is balanced by adding flow. The heating/cooling elements and well-insulated tanks can eliminate this difference.

In another embodiment, as mentioned previously, either of the two storage tanks and the associated plumbing could be eliminated, resulting in managing the transient by either adding or removing just one of the streams. This could be preferable if one of the streams has a low energy density (such as most gases), is at extreme conditions of temperature or pressure that makes storing the stream in a tank difficult or unsafe, or if mixing the two streams is highly undesirable.

In some situations it may be possible to predict the type and duration of potential transients. In such situations, the volume of the tanks should be approximately the same as the excess volume of fluid flowing in one of the streams during the transient. For fluid streams with short transients, this represents a manageable volume. For a gas heat stream or a long transient, the volume could be quite large.

One alternative to storage of large gas volumes is to condense the gas and store it as either a liquid or a solid. The phase change could be accomplished in a single storage vessel or via a separate heat exchanger (i.e., separate from the dynamic heat exchanger). In the example of the single storage vessel, the storage vessel could include a phase change material that condenses the gas. The phase change material could be a solid form of the gas material (e.g., ice when the gas is steam). In that scenario, the gas and the phase change material both become liquids. The phase change material could also be a different material from the gas. In that scenario, it may be desirable to select a phase change materials that is later separable from the condensed gas material. Of course, when a separate heat exchanger is used to condense the gas, then separation and compatibility of the phase change material is not an issue. However condensed, the condensed gas can then be vaporized as needed for supply to the dynamic heat exchanger.

This retrofit option applies equally to existing multi-stream heat exchangers by installing similar tank storage for one or more of the streams. It should be understood that even though the systems illustrated in Figures 8-13 are in the Retrofit Section, the systems could also be used with new process plumbing, instead of as a retrofit.

Non-Retrofit System

The following discussion describes the dynamic heat exchanger system first, followed by a description of its operation.

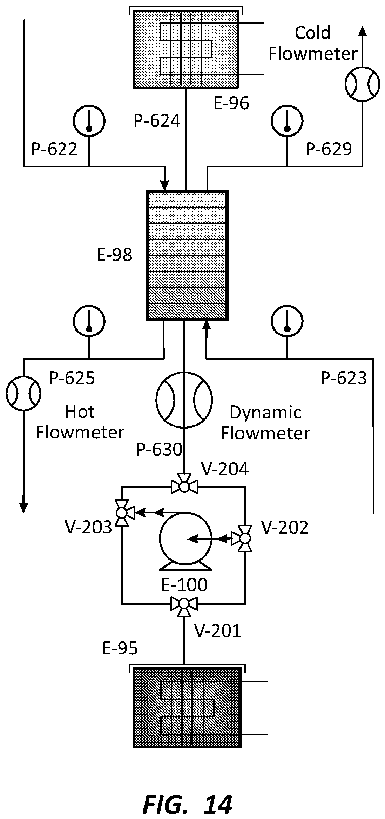

Figure 14 illustrates another embodiment of a heat exchanger system that utilizes an independent stream, referred to herein as the "non-retrofit system." The non-retrofit system uses similar principles as the retrofit system. The non-retrofit system includes as many hot and cold inlets as needed for the process, represented in the figure as a single stream for all hot inlets (P-622) and a different stream for all cold inlets (P-623). These connect to corresponding outlets (P-625 and P-629, respectively). At least one independent stream is added on both sides of the heat exchanger (P-624 and P-630), and these streams are materially connected (use the same fluid) through the heat exchanger (E-98) (e.g., may connect to the same tube in the heat exchanger). They connect to hot storage (E-96) and cold storage (E-95) tanks. The independent stream(s) (P-624 and P-630) and corresponding pumps and valves represent one or more balancing streams. A bidirectional pump, or a unidirectional pump with appropriate valves and plumbing (see, for example, pump E-100 and valves V-201, V-202, V-203, and V-204), moves fluid in the balancing stream. Flowmeters and temperature indicators provide control. At least one flowmeter on the independent stream may suffice for control.

A control system (not shown) is configured to control adding material to the independent stream from either the hot storage tank or the cold storage tank, when an upstream portion of any or all of the hot or cold streams experiences a change in conditions (i.e., transient), to thereby change heat transfer between the hot and cold streams.

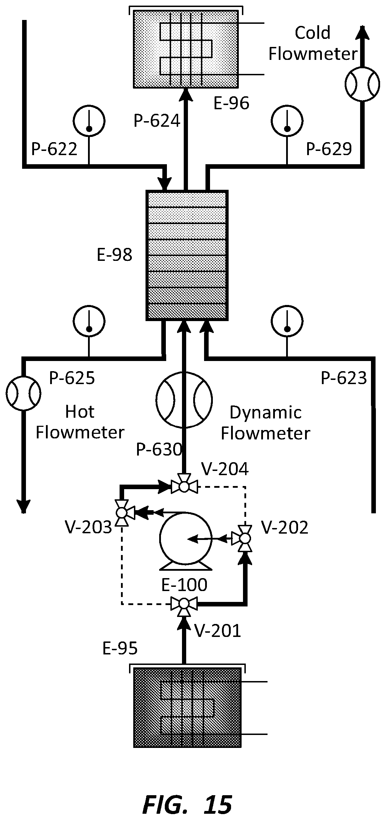

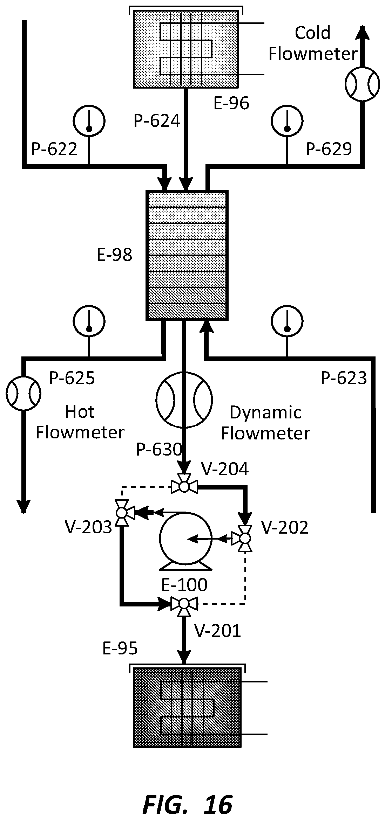

The non-retrofit dynamic heat exchanger system illustrated in Figure 14 operates much like the retrofit dynamic heat exchanger system illustrated in Figures 8-13, except that material flows from either the hot storage to the cold storage or vice versa. Illustrations of operation for the cases of too much high enthalpy and too much cold enthalpy appear in Figure 15 and Figure 16, respectively. Reference to the parameter ζ in these figure captions implies a summation in the numerator of all hot streams and in the denominator of all cold streams. That is,

$$\zeta = \frac{\sum_{hot} L_i v_i \rho_i c_{p,i}}{\sum_{cold} L_i v_i \rho_i c_{p,i}} = \frac{\sum_{hot} \dot{m}_i c_{p,i}}{\sum_{cold} \dot{m}_i c_{p,i}}.$$

A benefit of this and the retrofit heat exchanger systems is the ability to minimize the entropy production and the Gibbs energy loss in the heat exchanger. As with the retrofit system, in simple heat exchangers, this occurs as $\zeta$ approaches - 1. In complex systems involving large variations in heat capacity, condensation, vaporization, reactions, streams entering one side of the heat exchanger at significantly different temperatures, or other complicating factors, entropy and Gibbs energy loss might be minimized when $\zeta$ differs somewhat from -1. In the case of too much hot $\dot{m}c_p$ flow, the dynamic heat exchanger compensates by adjusting the balancing stream as shown in Figure 15. In the converse case, when cold flow exceeds hot flow, dynamic heat exchanger compensation appears in Figure 16. Unlike the retrofit version, this non-retrofit version generally requires the existing heat exchanger to be replaced by a new exchanger with at least one additional stream.

An advantage of the non-retrofit system is that a fluid with a high volumetric energy flow can be used to balance a heat exchanger, which in turn will decrease the size of tanks needed for a given magnitude and duration of a transient and may improve the heat transfer rates in the exchanger. For example, the new stream may include a fluid near its critical point, a molten metal, a salt solution, or any number of other fluids that have very high volumetric heat capacities. The configuration is also slightly less complex.

When a gaseous fluid is used to balance the dynamic heat exchanger, as with the retrofit system, an alternative to storage of large gas volumes is to condense the gas and store it as either a liquid or a solid. The discussions above regarding how that phase change could be accomplished for the retrofit system apply equally to the non-retrofit system. The condensed gas could be vaporized as needed for supply to the dynamic heat exchanger.

Figure 15 illustrates operation of the non-retrofit heat exchanger system when the high-temperature stream contains more energy or enthalpy than can be balanced by the low-temperature stream ($\zeta < -1$). Solid lines contain flow moving in the direction indicated by the arrows, and dashed lines have no flow. Figure 16 illustrates operation of the non-retrofit heat exchanger system when the low-temperature stream contains more energy or enthalpy than can be balanced by the high-temperature stream ($-1 < \zeta < 0$). Solid lines contain flow moving in the direction indicated by the arrows, and dashed lines have no flow.

Both the retrofit and non-retrofit systems, in addition to maintaining optimal efficiency and meeting set points during transients, also allow processes to move through these transients much more rapidly. Since the heat exchangers disclosed herein may maintain essentially the same temperature profile through the transient, the heat exchanger presents little if any barrier to the speed of the transient. Unlike traditional heat exchangers, which experience thermal stresses and other temperature-profile-related performance issues during transients, these heat exchangers may have no such variations. This can allow the process to move through transients, change loads, and follow set points at much more rapid speeds than is otherwise the case. In the examples that follow, the rapid transients are taken to an extreme, with heat exchanger performance monitored during step changes in stream properties. In the case of the conventional heat exchangers, the response times are very slow and the temperature gradients can be very high, while the dynamic heat exchangers disclosed herein reduce the response time and the gradients to near zero.

Examples

Proof-of-concept experiments demonstrated the dynamic heat exchanger systems. The retrofit version used a two-stream heat exchanger, and the non-retrofit version used a three-stream heat exchanger. Both heat exchangers operated at reasonable but not exceptionally good efficiency when balanced, similar to most installed heat exchangers in industrial practice. These experiments show that the dynamic system can maintain the baseline efficiency over a broad range of the flow conditions. The peak efficiency of the heat exchanger depends on exchanger size, exchanger design, process flow rates, and fluid properties. The examples show that the exchangers maintained optimal efficiency even as the process went through flow transients.

Retrofit Configuration

The retrofit system used a small, commercial (Dudadiesel), two-stream brazed-plate heat exchanger with conventional incoming and outgoing hot and cold streams configured essentially identical to the system shown in Figure 9. Table 1 summarizes geometrical features of this plate heat exchanger. Flowmeters (Great Plains Industry's TM050-N ½" NPT) recorded the two incoming stream flow rates. Digital control valves (Vallworx 5610A-DPS) coupled with the meters through the control system provided flow control. Type K thermocouples recorded temperatures of the streams flowing into and out of the heat exchanger. A National Instruments board (NI cDAQ-9188XT) connected to a laptop computer provided data acquisition and control.

Table 1 Main dimension of Dudadiesel B3-12A 10 plate heat exchanger

| Dimension | Value |
|---|---|
| Plate length (in/mm) | 7.5/191 |
| Plate width (in) | 2.9/74 |
| Plate thickness (in) | 0.0118/0.3 |
| Heat transfer area (ft$^2$/m$^2$) | 1.4/0.13 |
| Height (in) | 1.155/29.337 |

Non-Retrofit Configuration

The non-retrofit system used a custom-built, plate-and-frame, three-stream heat exchanger essentially identical to the illustration in Figure 14. It used 30 custom-made aluminum plates with incoming and outgoing hot and cold streams and a third stream connecting two storage tanks. The stream pattern between the plates in the heat exchanger cycled through the three streams in sequence.

Table 2 provides geometrical features of this exchanger. A bidirectional pump, with appropriate valves and plumbing, moved fluid in the balancing stream.

Table 2 Geometry of the custom-made three-stream plate heat exchanger

| Dimension | Value |
|---|---|
| Plate length (in/mm) | 12/305 |
| Plate width (in/mm) | 5/127 |
| Plate thickness (in/mm) | 0.031/0.79 |
| Heat transfer area (ft$^2$/m$^2$) | 40/3.72 |
| Height (in/mm) | 4.5/114 |

Experimental Results

The general experimental approach demonstrated here involved establishing a steady, balanced flow through the exchangers and then perturbing the flow while monitoring the exchanger performance. The flow perturbations were very nearly step functions, followed by a second step function back to the original flow condition. The overall experiment involved changing one or both flows from their balanced condition to an off-balance condition for a few minutes and then returning them back to the balanced condition. Experiments included heat exchanger performance with the dynamic system idle and active and with both the retrofit and non-retrofit versions of the technology.

Flow conditions during active system operation depended on whether they referenced the process streams or the heat exchanger streams. Process streams referred to calculations based on flow rates that approached the heat exchanger prior to the location of their interface with the dynamic heat exchange system. Heat exchanger streams referred to calculations based on the flows in the heat exchanger itself. When the dynamic system was idle, these were identical. When it was active, they differed significantly. Terminology such as $\zeta$-process and $\zeta$-exchanger distinguish the two figures of merit from when the technology was active. When the technology was idle, the flows in the exchanger did not differ from those approaching the exchanger and there was only one value of $\zeta$.

The approaching streams included the hot and cold streams. While these labels seem obvious, it was possible that the outlet temperature of the hot stream would be less than the outlet temperature of the cold stream; that is, at the outlet conditions, the hot stream may be colder than the cold stream in some experiments. The terms hot and cold refer to the flow properties prior to the heat exchanger and should not be confused with the properties after the heat exchanger.

Retrofit Technology

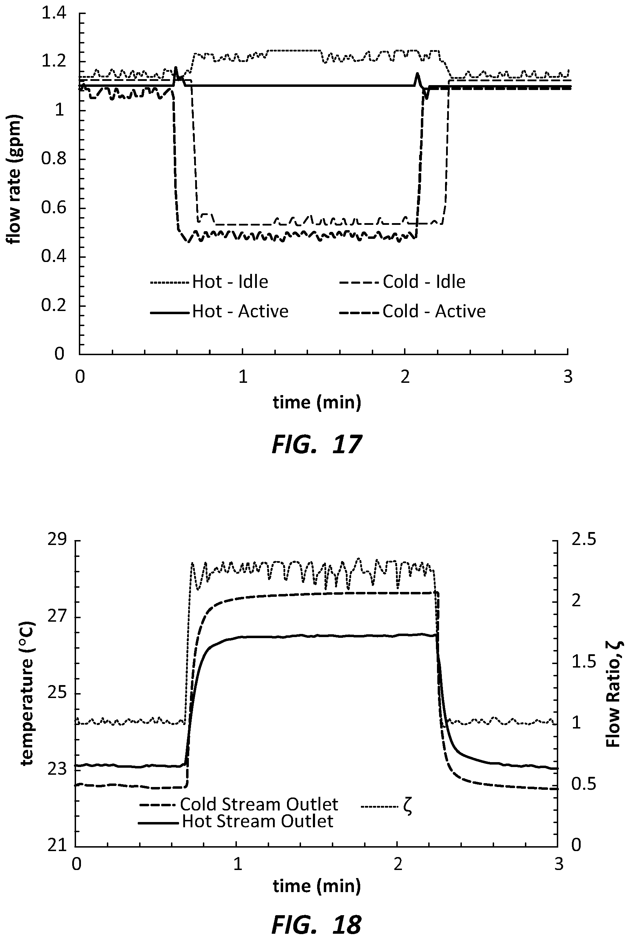

Experiments proceeded by introducing a step change in the conditions of a steady-state, nominally balanced ($\zeta \approx 1$) heat exchanger such that $\zeta$ changes by a factor of approximately two. Typically, the change occurred by altering the flow rate of one or both streams, though in principle, changes in temperature or composition of one or both of the streams could accomplish the same thing. Figure 17 indicates typical data from one of the experiments in which flow rates changed abruptly and then returned to their original values. The flow rate changes occurred mainly by decreasing the cold flow by about a factor of two and secondarily by a smaller increase in the hot flow in the idle case. The active and idle conditions represent results from two separate experiments and show minor differences in conditions. However, the hot and cold flow rate differences prior to, during, and after the perturbation correspond closely to each other in the idle case and the active case, providing a good basis for comparison in the efficiencies.

Changes in outlet temperatures (left ordinate) and $\zeta$ (right ordinate) appear in Figure 18 for the idle case. In the active case, the outlet temperatures and $\zeta$ did not change appreciably. The outlet temperatures changed rapidly, but more slowly than $\zeta$ and the flow rates changed. The slower response was in part because the heat exchanger's mass and heat capacity prevented temperatures from changing instantaneously and in part because it takes some time for the flow to transit the heat exchanger. In the idle case, the cold flow outlet temperature exceeded the hot flow outlet temperature during part of the time. This is not unusual for counter-flow heat exchangers and can happen during both balanced and imbalanced operation. The value of $\zeta$ changed from close to unity to slightly over 2 and then returned to unity.

Figure 17 illustrates typical temporal variation in the flow rates of the test two-stream, counter-current heat exchanger involving a perturbation from $\zeta \approx 1$ to $\zeta \approx 2.3$ (more hot flow than cold flow). The active and idle conditions represent results from two separate experiments and show minor differences in conditions. However, the hot and cold flow rate differences, both during the perturbation and before and after it, were nearly identical, providing a good basis for comparison in the efficiencies.

Figure 18 illustrates typical temporal variation in the outlet temperatures (left ordinate) and $\zeta$ (right ordinate) in the test two-stream, counter-current heat exchanger with an idle dynamic heat exchanger system.

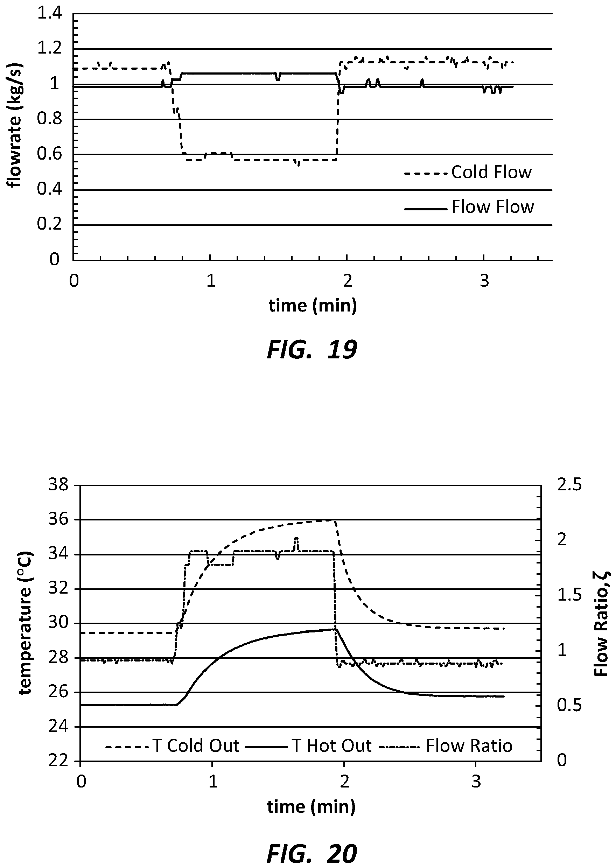

The three-stream heat exchanger exhibited conceptually similar features with some differences. The flow rates, Figure 19, changed in similar ways, as did the ratio $\zeta$, Figure 20. However, the outlet temperatures responded more slowly than they did in the two-stream version, principally because the stagnant third stream increases the product of the mass and heat capacity and hence increases the response time constant.

Figure 19 illustrates typical temporal variation in the flow rates of the test three-stream, counter-current heat exchanger in these experiments in which the third stream was stagnant and the dynamic heat exchanger technology was not operating.

Figure 20 illustrates typical temporal variation in the outlet temperatures (right ordinate) and flow ratio, $\zeta$, of the test three-stream, counter-current heat exchanger in these experiments in which the third stream was stagnant and the dynamic heat exchanger technology was not operating.

In all of the above cases, the flow ratio varied from its balanced condition, $\zeta = 1$, to an imbalanced condition where $\zeta > 1$, and back to the balanced condition. Additional experiments varied the value of flow ratio from near unity to about 0.5 and back again by a combination of decreasing the hot flow and increasing the cold flow from their balanced values. These experiments followed the same patterns as are shown here except that $\zeta$ decreased and temperatures decreased during the perturbation when $\zeta$ differed from unity. The next section includes summary results of both types of experiments, that is, experiments with $\zeta$ perturbations greater than and less than unity. The next section also contrasts these results with those for when the dynamic technology is operating.

Heat Exchanger Transients with the Dynamic Technology

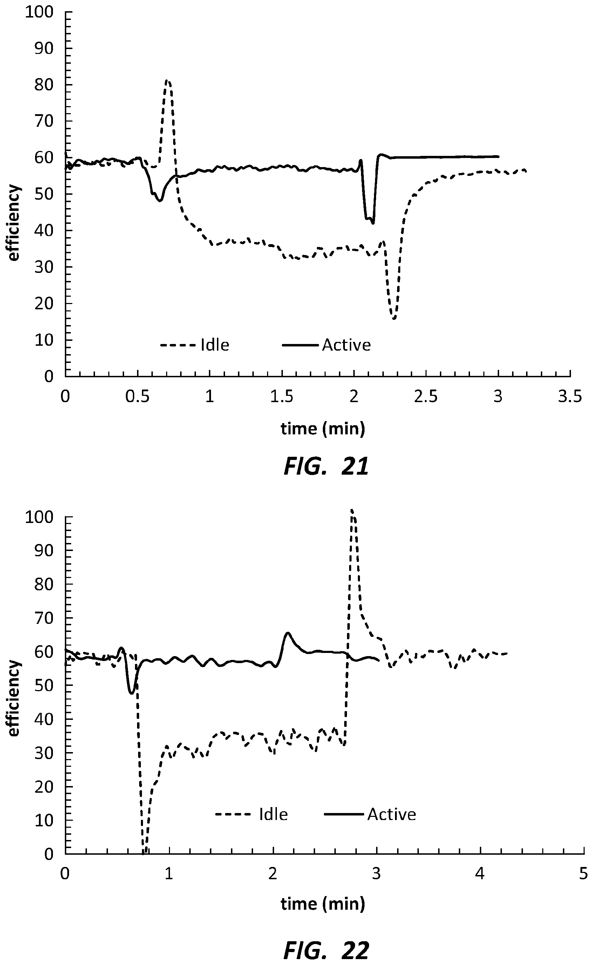

Figure 21 illustrates the heat exchanger efficiency variation in time during operations with the dynamic heat exchanger ("DHX") technology active and idle for the test two-stream, counter-current heat exchanger operating with perturbations in $\zeta$ ranging from one to greater than one, similar to the graphs shown in the previous section. There are large transient perturbations in the computed efficiencies associated with the rapid changes in $\zeta$ at the beginning and end of the perturbation. The DHX technology essentially removed the drop in efficiency associated with the transient. Specifically, the DHX technology maintained the heat exchanger efficiency at its balanced value even as the flows underwent large perturbations. The internal temperature profiles of the exchanger were essentially constant through the transient, so the process could move through the transient at arbitrarily high rates. The only limiting factor was that the tanks had to be capable of holding enough fluid to last through the transient.

In these transients, the efficiency may exceed unity or be less than zero because of the heat exchanger internal temperature changing the flow temperatures and the finite transit time of the flow through the heat exchanger. The effect of the internal temperature profile was only significant when the DHX technology was idle. The effect of the finite transit time was significant in both cases. The flow controller sensing thresholds and response time also led to some efficiency spikes. The two results illustrated here come from separate experiments, and the beginning and ending of the $\zeta$ perturbation correspond quite closely but not exactly in the two cases.

Figure 21 illustrates efficiency variation in time during operations with the dynamic heat exchanger technology active and idle for the test two-stream, counter-current heat exchanger operating with perturbations in $\zeta$ ranging from one to greater than one. These were separate experiments, and the beginning and ending of the time perturbation correspond quite closely but not exactly in the two cases.

Figure 22 illustrates the heat exchanger efficiency variation in time during operations with the dynamic heat exchanger technology active and idle for the test two-stream, counter-current heat exchanger operating with perturbations in $\zeta$ ranging from one to less than one. Unlike the graphs shown in the previous section, there were large transient perturbations in the computed efficiencies associated with the rapid changes in $\zeta$ at the beginning and end of the perturbation. The figure again illustrates that the DHX technology essentially removed the drop in efficiency associated with the transient. Specifically, the DHX technology maintained the heat exchanger efficiency at its balanced value even as the flows underwent large perturbations. The internal temperature profiles of the exchanger were essentially constant through the transient, so the process could move through the transient at arbitrarily high rates. The only limiting factor was that the tanks had to be capable of holding enough fluid to last through the transient.

The same features of the spikes in the efficiency for experiments having somewhat different starting and stopping times for the $\zeta$ perturbation apply to this figure as applied to the previous figure. The fact that the efficiency spikes occur in the opposite directions in the previous example results from the $\zeta$ perturbation being in the opposite direction, less than one in this case, whereas in the previous case it was greater than one.

Figure 22 illustrates efficiency variation in time during operations with the dynamic heat exchanger technology active and idle for the test two-stream, counter-current heat exchanger operating with perturbations in $\zeta$ ranging from one to less than one. These are separate experiments, and the beginning and ending of the time perturbation correspond quite closely but not exactly in the two cases.

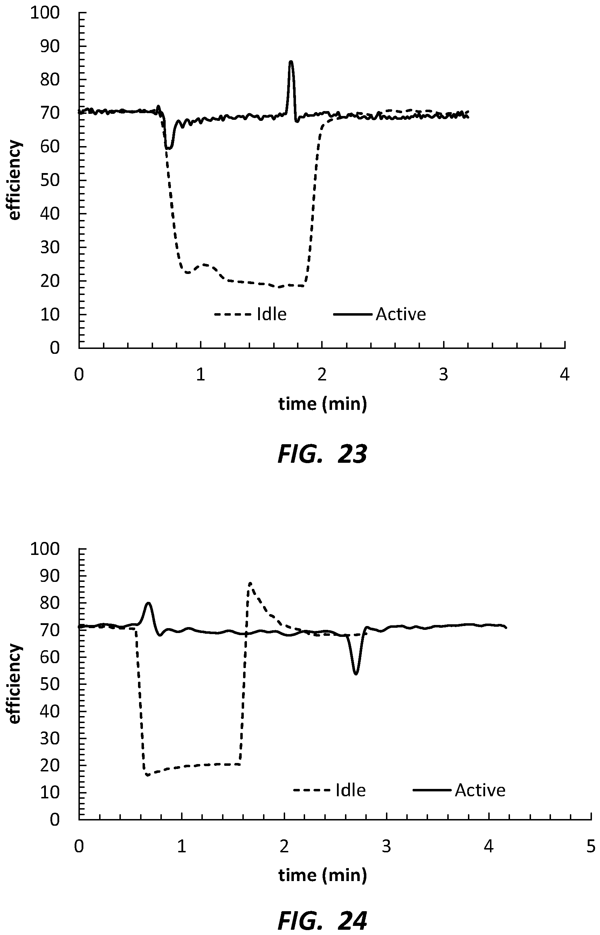

Similar plots for the three-stream version show similar trends for $\zeta$ perturbations both greater than unity (Figure 23) and less than unity (Figure 24). The test three-stream heat exchanger baseline efficiency was well below that of the two-stream heat exchanger. That was mainly a function of its design and partially of its operation. However, the DHX technology maintained the heat exchanger efficiency at its baseline value through the perturbation, the same as with the test two-stream heat exchanger results. The comparative results in Figure 24 differ in the length of the perturbation of the two cases by more than any of the other figures, with the active technology perturbation lasting approximately twice as long as the idle technology perturbation.

Figure 23 illustrates efficiency variation in time during operations with the dynamic heat exchanger technology active and idle for the test three-stream, counter-current heat exchanger operating with perturbations in $\zeta$ ranging from one to greater than one. These were separate experiments, and the beginning and ending of the time perturbation correspond quite closely but not exactly in the two cases. Figure 24 illustrates efficiency variation in time during operations with the dynamic heat exchanger technology active and idle for the test three-stream, counter-current heat exchanger operating with perturbations in $\zeta$ ranging from one to less than one. These were separate experiments. The beginning of the perturbations was quite close to each other, but the active technology perturbation lasted about twice as long as the idle technology perturbation.

Without further elaboration, it is believed that one skilled in the art can use the preceding description to utilize the present disclosure to its fullest extent. The examples and embodiments disclosed herein are to be construed as merely illustrative and exemplary and not a limitation of the scope of the present disclosure in any way. It will be apparent to those having skill in the art, and having the benefit of this disclosure, that changes may be made to the details of the above-described embodiments without departing from the underlying principles of the disclosure herein.

## Claims

**1.** A method of managing heat exchange between a first stream and a second stream over a broad range of conditions, wherein the first stream comprises an upstream portion (P533, P637) and a downstream portion (P651) and wherein the second stream also comprises an upstream portion (P639 / P636) and a downstream portion (P643), the method comprising:

exchanging heat between a first stream and a second stream;
first adding material temporarily to either the upstream portion of the first stream or the upstream portion of the second stream, when the other of the two streams is experiencing a change in conditions, to thereby manage heat transfer between the first stream and the second stream while the other of the streams is experiencing the change in conditions; and
then removing material temporarily from the upstream portion of the stream to which material has been added, when the other of the two streams is experiencing an opposite change in conditions, to thereby manage heat transfer between the first stream and the second stream while the other of the streams is experiencing the opposite change in conditions;
wherein material in the first stream is supplied from a first primary source and material in the second stream is supplied from a second primary source, wherein adding material to and removing material from either the upstream portion of the first stream or the upstream portion of the second stream comprises adding material from a reservoir that is separate from the first primary source and the second primary source, and removing material to the reservoir.

2. The method of claim 1, wherein the upstream portion of the stream experiencing the change in conditions is the portion experiencing the change.

3. The method of claim 1 or 2, wherein managing heat transfer between the first stream and the second stream reduces any deviation from a design temperature of the downstream portion of the stream that is experiencing the change in conditions.

4. The method of claim 3, wherein any deviation from the design temperature of the downstream portion of the stream that is experiencing the change in conditions is reduced to a percent deviation of about 25% or less, about 20% or less, about 15% or less, about 10% or less, about 5% or less, or about 1% or less.

5. The method of any one of claims 1-4, wherein the change in conditions comprises a change in flow rate, temperature, pressure, composition, density, heat capacity, or combinations thereof, of the stream experiencing the change.

6. The method of claim 1, wherein a first reservoir is used when adding material to and removing material from the upstream portion of the first stream and wherein a second reservoir is used when adding material to and removing material from the upstream portion of the second stream, wherein the first reservoir is separate from the first primary source and the second reservoir is separate from the second primary source.

7. The method of claim 6, temporarily removing material from the upstream portion of the first stream is performed while the upstream portion of the second stream is at steadystate conditions to at least partially refill the first reservoir after the first reservoir was depleted from adding material to the first stream while the second stream was experiencing a change in conditions, wherein the removing is conducted at a low enough flow rate that a heat exchanger transferring heat between the first stream and the second stream is substantially balanced during the refilling of the first reservoir.

8. The method of claim 6, temporarily adding material to the upstream portion of the first stream is performed while the upstream portion of the second stream is at steady-state conditions to at least partially empty the first reservoir after the first reservoir was filled from removing material from the first stream while the second stream was experiencing a change in conditions, wherein the adding is conducted at a low enough flow rate that a heat exchanger transferring heat between the first stream and the second stream is substantially balanced during the emptying of the first reservoir.

9. The method of claim 6, wherein the first reservoir comprises a phase change material selected and configured to condense gaseous material removed from the upstream portion of the first stream.

10. The method of claim 6, wherein the first reservoir comprises a first storage tank that is optionally insulated and/or optionally actively heated or cooled and wherein the second reservoir comprises a second storage tank that is optionally insulated and/or optionally actively heated or cooled, wherein if the first storage tank is actively heated, then the second storage tank is optionally actively cooled.

11. The method of any one of claims 1-10, wherein the first stream comprises a process stream, and the second stream comprises a heating or cooling stream, wherein the first stream comprises a heating or cooling stream, and the second stream comprises a process stream; or wherein the first stream and the second stream both comprise process streams or both comprise heating or cooling streams.

12. The method of any one of claims 1-11, wherein either the upstream portion of the first stream or the upstream portion of the second stream is at a higher temperature than the other.

13. The method of any one of claims 1-12, further comprising identifying the existence of a change in conditions in either the first stream or the second stream, wherein the identifying occurs at a heat exchanger outlet of the stream experiencing the change, or wherein the identifying occurs prior to any deviation in the design temperature of the downstream portion of the stream experiencing the change, such as prior to the upstream portion of the stream experiencing the change entering a heat exchanger.

**Patentansprüche**

1. Verfahren zum Verwalten eines Wärmeaustauschs zwischen einem ersten Strom und einem zweiten Strom über einen breiten Bereich von Bedingungen, wobei der erste Strom einen Stromaufwärtsanteil (P533, P637) und einen Stromabwärtsanteil (P651) aufweist und wobei der zweite Strom ebenfalls einen Stromaufwärtsanteil (P639 / P636) und einen Stromabwärtsanteil (P643) aufweist, wobei das Verfahren aufweist:

   Tauschen von Wärme zwischen einem ersten Strom und einem zweiten Strom;
   zuerst vorübergehendes Hinzufügen von Material entweder zum Stromaufwärtsanteil des ersten Stroms oder zum Stromaufwärtsanteil des zweiten Stroms, wenn der andere der beiden Ströme eine Änderung der Bedingungen erfährt, um dadurch die Wärmeübertragung zwischen dem ersten Strom und dem zweiten Strom zu steuern, während der andere der Ströme die Änderung der Bedingungen erfährt; und
   dann vorübergehendes Entfernen von Material aus dem Stromaufwärtsanteil des Stroms, dem Material hinzugefügt wurde, wenn der andere der beiden Ströme eine entgegengesetzte Änderung der Bedingungen erfährt, um dadurch die Wärmeübertragung zwischen dem ersten Strom und dem zweiten Strom zu steuern, während der andere der Ströme die entgegengesetzte Änderung der Bedingungen erfährt;
   wobei Material im ersten Strom von einer ersten primären Quelle zugeführt wird und Material im zweiten Strom von einer zweiten primären Quelle zugeführt wird, wobei das Hinzufügen von Material zu und das Entfernen von Material aus entweder dem Stromaufwärtsanteil des ersten Stroms oder dem Stromaufwärtsanteil des zweiten Stroms das Hinzufügen von Material aus einem Reservoir, das von der ersten primären Quelle und der zweiten primären Quelle getrennt ist, und das Entfernen von Material zum Reservoir aufweist.

2. Verfahren nach Anspruch 1, wobei der Stromaufwärtsanteil des Stroms, der die Änderung der Bedingungen erfährt, der Anteil ist, der die Änderung erfährt.

3. Verfahren nach Anspruch 1 oder 2, wobei das Verwalten der Wärmeübertragung zwischen dem ersten Strom und dem zweiten Strom jede Abweichung von einer Auslegungstemperatur des Stromabwärtsanteils des Stroms, der die Änderung der Bedingungen erfährt, verringert.

4. Verfahren nach Anspruch 3, wobei jede Abweichung von der Auslegungstemperatur des Stromabwärtsanteils des Stroms, der die Änderung der Bedingungen erfährt, auf eine prozentuale Abweichung von etwa 25 % oder weniger, etwa 20 % oder weniger, etwa 15 % oder weniger, etwa 10 % oder weniger, etwa 5 % oder weniger oder etwa 1 % oder weniger reduziert wird.

5. Verfahren nach einem der Ansprüche 1 bis 4, wobei die Änderung der Bedingungen eine Änderung der Durchflussrate, der Temperatur, des Drucks, der Zusammensetzung, der Dichte, der Wärmekapazität oder Kombinationen davon des Stroms aufweist, der die Änderung erfährt.

6. Verfahren nach Anspruch 1, wobei ein erstes Reservoir beim Hinzufügen von Material zum und Entfernen von Material aus dem Stromaufwärtsanteil des ersten Stroms verwendet wird, und wobei ein zweites Reservoir beim Hinzufügen von Material zum und Entfernen von Material aus dem Stromaufwärtsanteil des zweiten Stroms verwendet wird, wobei das erste Reservoir von der ersten primären Quelle getrennt ist und das zweite Reservoir von der zweiten primären Quelle getrennt ist.

7. Verfahren nach Anspruch 6, wobei das vorübergehende Entfernen von Material aus dem Stromaufwärtsanteil des ersten Stroms durchgeführt wird, während sich der Stromaufwärtsanteil des zweiten Stroms in stationären Bedingungen befindet, um das erste Reservoir zumindest teilweise wieder aufzufüllen, nachdem das erste Reservoir durch das Hinzufügen von Material zum ersten Strom erschöpft wurde, während der zweite Strom eine Änderung der Bedingungen erfuhr, wobei das Entfernen bei einer Durchflussrate durchgeführt wird, die niedrig genug ist, dass ein Wärmetauscher, der Wärme zwischen dem ersten Strom und dem zweiten Strom überträgt, während des Wiederauffüllens des ersten Reservoirs im Wesentlichen ausgeglichen ist.

8. Verfahren nach Anspruch 6, wobei das zeitweilige Hinzufügen von Material zum Stromaufwärtsanteil des ersten Stroms durchgeführt wird, während sich der Stromaufwärtsanteil des zweiten Stroms in stationären Bedingungen befindet, um das erste Reservoir zumindest teilweise zu entleeren, nachdem das erste Reservoir durch das Entfernen von Material aus dem ersten Strom gefüllt wurde, während der zweite Strom eine Änderung der Bedingungen erfuhr, wobei das Hinzufügen mit einer so geringen Durchflussrate durchgeführt wird, dass ein Wärmetauscher, der Wärme zwischen dem ersten Strom und dem zweiten Strom überträgt, während des Entleerens des ersten Reservoirs im Wesentlichen ausgeglichen ist.

9. Verfahren nach Anspruch 6, wobei das erste Reservoir ein Phasenwechselmaterial aufweist, das ausgewählt und konfiguriert ist, gasförmiges Material zu kondensieren, das aus dem Stromaufwärtsanteil des ersten Stroms entfernt wird.

10. Verfahren nach Anspruch 6, wobei das erste Reservoir einen ersten Speichertank aufweist, der optional isoliert ist und/oder optional aktiv beheizt oder gekühlt wird, und wobei das zweite Reservoir einen zweiten Speichertank aufweist, der optional isoliert ist und/oder optional aktiv beheizt oder gekühlt wird, wobei, wenn der erste Speichertank aktiv beheizt wird, der zweite Speichertank optional aktiv gekühlt wird.

11. Verfahren nach einem der Ansprüche 1 bis 10, wobei der erste Strom einen Prozessstrom aufweist und der zweite Strom einen Heiz- oder Kühlstrom aufweist, wobei der erste Strom einen Heiz- oder Kühlstrom aufweist und der zweite Strom einen Prozessstrom aufweist; oder wobei der erste Strom und der zweite Strom beide Prozessströme aufweisen oder beide Heiz-oder Kühlströme aufweisen.

12. Verfahren nach einem der Ansprüche 1 bis 11, wobei entweder der Stromaufwärtsanteil des ersten Stroms oder der Stromaufwärtsanteil des zweiten Stroms eine höhere Temperatur aufweist als der jeweils andere.

13. Verfahren nach einem der Ansprüche 1 bis 12, das ferner das Identifizieren des Vorhandenseins einer Änderung der Bedingungen entweder im ersten Strom oder im zweiten Strom aufweist, wobei das Identifizieren an einem Wärmetauscherauslass des Stroms erfolgt, der die Änderung erfährt, oder wobei das Identifizieren vor einer Abweichung der Auslegungstemperatur des Stromabwärtsanteils des Stroms erfolgt, der die Änderung erfährt, wie beispielsweise vor dem Eintritt des Stromaufwärtsanteils des Stroms, der die Änderung erfährt, in einen Wärmetauscher.

## Revendications

1. Méthode de gestion d'un échange thermique entre un premier flux et un deuxième flux dans une large gamme de conditions, dans laquelle le premier flux comprend une partie en amont (P533, P637) et une partie en aval (P651) et dans laquelle le deuxième flux comprend également une partie en amont (P639/P636) et une partie en aval (P643), la méthode comprenant :

   l'échange thermique entre un premier flux et un deuxième flux ;
   tout d'abord l'ajout d'une matière de manière temporaire soit à la partie en amont du premier flux soit à la partie en amont du deuxième flux, lorsque l'autre des deux flux subit un changement de conditions, pour gérer ainsi un transfert thermique entre le premier flux et le deuxième flux tandis que l'autre des flux subit le changement de conditions ; et
   puis le retrait de la matière de manière temporaire de la partie en amont du flux à laquelle la matière a été ajoutée, lorsque l'autre des deux flux subit un changement opposé de conditions, pour gérer ainsi un transfert thermique entre le premier flux et le deuxième flux tandis que l'autre des flux subit le changement opposé de conditions ;
   dans laquelle la matière dans le premier flux est fournie à partir d'une première source primaire et la matière dans le deuxième flux est fournie à partir d'une deuxième source primaire, dans laquelle l'ajout de la matière à et le retrait de la matière de soit la partie en amont du premier flux soit la partie en amont du deuxième flux comprennent l'ajout de la matière à partir d'un réservoir qui est séparé de la première source primaire et de la deuxième source primaire, et le retrait de la matière vers le réservoir.

2. Méthode selon la revendication 1, dans laquelle la partie en amont du flux subissant le changement de conditions est la partie subissant le changement.

3. Méthode selon la revendication 1 ou 2, dans laquelle la gestion du transfert thermique entre le premier flux et le deuxième flux réduit tout écart par rapport à une température de calcul de la partie en aval du flux qui subit le changement de conditions.

4. Méthode selon la revendication 3, dans laquelle tout écart par rapport à la température de calcul de la partie en aval du flux qui subit le changement de conditions est réduit à un écart en pourcentage d'environ 25 % ou moins, environ 20 % ou moins, environ 15 % ou moins, environ 10 % ou moins, environ 5 % ou moins ou environ 1 % ou moins.

**5.** Méthode selon l'une quelconque des revendications 1 à 4, dans laquelle le changement de conditions comprend un changement de débit, température, pression, composition, densité, capacité thermique ou combinaisons de ceux-ci, du flux subissant le changement.

**6.** Méthode selon la revendication 1, dans laquelle un premier réservoir est utilisé lors de l'ajout de la matière à et du retrait de la matière de la partie en amont du premier flux et dans laquelle un deuxième réservoir est utilisé lors de l'ajout de la matière à et du retrait de la matière de la partie en amont du deuxième flux, dans laquelle le premier réservoir est séparé de la première source primaire et le deuxième réservoir est séparé de la deuxième source primaire.

**7.** Méthode selon la revendication 6, le retrait de manière temporaire de la matière de la partie en amont du premier flux est réalisé tandis que la partie en amont du deuxième flux est dans des conditions de régime constant pour remplir à nouveau au moins partiellement le premier réservoir après que le premier réservoir a été épuisé suite à l'ajout de la matière au premier flux tandis que le deuxième flux subissait un changement de conditions, dans laquelle le retrait est effectué à un débit suffisamment bas pour qu'un échangeur thermique transférant de la chaleur entre le premier flux et le deuxième flux soit sensiblement équilibré durant le nouveau remplissage du premier réservoir.

**8.** Méthode selon la revendication 6, l'ajout de manière temporaire de la matière à la partie en amont du premier flux est réalisé tandis que la partie en amont du deuxième flux est dans des conditions de régime constant pour vider au moins partiellement le premier réservoir après que le premier réservoir a été rempli suite au retrait de la matière du premier flux tandis que le deuxième flux subissait un changement de conditions, dans laquelle l'ajout est effectué à un débit suffisamment bas pour qu'un échangeur thermique transférant de la chaleur entre le premier flux et le deuxième flux soit sensiblement équilibré durant le vidage du premier réservoir.

**9.** Méthode selon la revendication 6, dans laquelle le premier réservoir comprend une matière à changement de phase sélectionnée et configurée pour condenser une matière gazeuse retirée de la partie en amont du premier flux.

**10.** Méthode selon la revendication 6, dans laquelle le premier réservoir comprend une première cuve de stockage qui est optionnellement isolée et/ou optionnellement chauffée ou refroidie activement et dans laquelle le deuxième réservoir comprend une deuxième cuve de stockage qui est optionnellement isolée et/ou optionnellement chauffée ou refroidie activement, dans laquelle si la première cuve de stockage est chauffée activement, alors la deuxième cuve de stockage est optionnellement refroidie activement.

**11.** Méthode selon l'une quelconque des revendications 1 à 10, dans laquelle le premier flux comprend un flux de traitement, et le deuxième flux comprend un flux de chauffage ou de refroidissement, dans laquelle le premier flux comprend un flux de chauffage ou de refroidissement, et le deuxième flux comprend un flux de traitement ; ou dans laquelle le premier flux et le deuxième flux comprennent tous deux des flux de traitement ou comprennent tous deux des flux de chauffage ou de refroidissement.

**12.** Méthode selon l'une quelconque des revendications 1 à 11, dans laquelle soit la partie en amont du premier flux soit la partie en amont du deuxième flux est à une température plus élevée que l'autre.

**13.** Méthode selon l'une quelconque des revendications 1 à 12, comprenant en outre l'identification de l'existence d'un changement de conditions soit dans le premier flux soit dans le deuxième flux, dans laquelle l'identification a lieu au niveau d'une sortie d'échangeur thermique du flux subissant le changement, ou dans laquelle l'identification a lieu avant tout écart de la température de calcul de la partie en aval du flux subissant le changement, par exemple avant que la partie en amont du flux subissant le changement n'entre dans un échangeur thermique.

**FIG. 1**

**FIG. 2**

**FIG. 3**

**FIG. 4**

*FIG. 5*

*FIG. 6*

FIG. 7

FIG. 8

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**FIG. 22**

*FIG. 23*

*FIG. 24*

**EP 3 286 515 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62120336
- US 2007289732 A1